Europäisches Patentamt

(19) European Patent Office

Office européen des brevets

(11) Numéro de publication : **0 129 471**
**B1**

(12) **FASCICULE DE BREVET EUROPÉEN**

(45) Date de publication du fascicule du brevet :
09.11.88

(51) Int. Cl.⁴ : **G 01 S   1/54**

(21) Numéro de dépôt : **84401206.2**

(22) Date de dépôt : **13.06.84**

(54) **Procédé d'augmentation de portée et notamment de protection contre le brouillage, d'un système d'aide à l'atterrissage de type MLS, et dispositifs de mise en oeuvre d'un tel procédé.**

(30) Priorité : **21.06.83 FR 8310239**

(43) Date de publication de la demande :
**27.12.84 Bulletin 84/52**

(45) Mention de la délivrance du brevet :
**09.11.88 Bulletin 88/45**

(84) Etats contractants désignés :
**DE GB IT**

(56) Documents cités :
**FR-A- 2 519 430**
**US-A- 4 178 581**
**NEC RESEARCH AND DEVELOPMENT, no. 59, octobre 1980 (TOKYO, JP) G. ONODERA et al.: "Development of approach elevation equipment in MLS", pages 34-45**
**NAVIGATION, volume 29, no. 114, avril 1981 (PARIS, FR) B. LETOQUART et al.: "Le MLS - Un exemple d'utilisation du microprocesseur", pages 174-187**

(73) Titulaire : **THOMSON-CSF**
**173, Boulevard Haussmann**
**F-75379 Paris Cedex 08 (FR)**

(72) Inventeur : **Letoquart, Bruno**
**THOMSON-CSF SCPI 173, bld Haussmann**
**F-75379 Paris Cedex 08 (FR)**

(74) Mandataire : **Benoit, Monique et al**
**THOMSON-CSF SCPI 19, avenue de Messine**
**F-75008 Paris (FR)**

**0 129 471**

**Description**

La présente invention se rapporte aux systèmes d'aide à l'atterrissage du type MLS ; elle la plus particulièrement pour objet un procédé d'augmentation de portée d'un tel système, permettant notamment une protection contre le brouillage, d'un tel système, ainsi que des dispositifs de mise en œuvre de ce procédé.

On rappelle que le système MLS (initiales de l'expression anglo-saxonne « Microwave Landing System ») est un système permettant d'aider un avion à l'atterrissage en lui fournissant différentes informations, appelées « fonctions », telles que son angle d'azimut par rapport à l'axe de la piste, son angle de site par rapport à l'horizontale, éventuellement d'autres fonctions annexes telles que azimut arrière par exemple, et un certain nombre de données, les unes dites « de base » et les autres dites « auxiliaires ». Ces différentes informations sont émises en permanence à partir du sol en multiplexage temporel sur la même fréquence, selon des caractéristiques normalisées par l'OACI (Organisation de l'Aviation Civile Internationale) annexe 10, paragraphe 3.II ; elles sont décodées par chaque avion intéressé.

Chacune des fonctions précédentes se décompose en deux parties, émises successivement :

— un préambule, dont le rôle est de fournir à l'avion une identification de la fonction qui va suivre ; ce préambule est émis par une antenne dite sectorielle, c'est-à-dire une antenne fixe émettant dans l'ensemble de la zone, ou secteur, que le système MLS doit couvrir ; selon la norme OACI, le préambule se présente sous la forme d'un mot de douze bits, comportant notamment sept bits qui constituent un « code d'identification » désignant de façon biunivoque chacune des fonctions, émis en modulation de phase DPSK (pour Differential Phase Shift Keying) à deux états $(0, \pi)$ ;

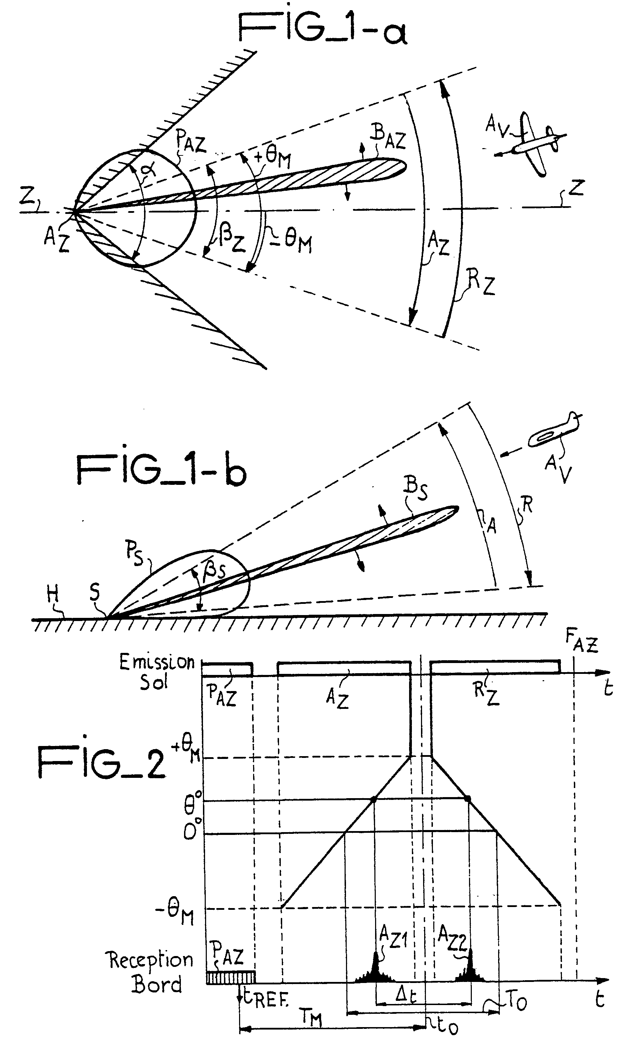

— la fonction proprement dite : dans le cas où cette fonction est une donnée, elle est émise par l'antenne sectorielle également en modulation de phase DPSK à deux états ; dans le cas où cette fonction est une information angulaire, elle est constituée par deux impulsions émises à l'aide d'une antenne à balayage, selon le principe dit du faisceau battant à référence temporelle décrit plus en détail figures 1a, 1b et 2.

Sur la figure 1a est illustré le principe du codage de l'angle d'azimut.

D'une station azimut, selon ce qui précède, sont émis deux rayonnements différents par deux antennes distinctes, que pour simplifier on a représenté en un même point $A_Z$. Partant du point $A_Z$, on a donc d'une part le diagramme d'émission du préambule, noté $P_{AZ}$, émis par une antenne sectorielle dans toute la zone de couverture du système MLS, qui est représentée sur la figure par un angle $\alpha$. De ce point $A_Z$ on a, d'autre part, le diagramme d'un faisceau $B_{AZ}$ plat et vertical, dit faisceau battant, émis par une antenne à balayage électronique ; le faisceau $B_{AZ}$ effectue à vitesse constante un balayage aller puis, après un temps d'arrêt, un balayage retour, et ce dans une zone de balayage faisant un angle $\beta_Z$ sur la figure, qui peut être égal ou inférieur à l'angle de couverture $\alpha$ précédent. Sur la figure, on a figuré $\rho_Z$ inférieur à $\alpha$ ; on a figuré également respectivement par une flèche $A_Z$ et une flèche $R_Z$ les trajets de balayage aller et balayage retour du faisceau $B_{AZ}$ dans la zone de balayage $\beta_Z$. On a enfin figuré un avion $A_V$ non correctement aligné, à titre d'exemple, avec l'axe ZZ de la piste.

Selon les normes OACI, l'angle $\beta_Z$ est égal soit à 20°, se décomposant par rapport à l'axe de piste ZZ en deux demi-angles $-\theta_M = +\theta_M = 10°$, soit 80° avec $-\theta_M = +\theta_M = 40°$ ; le faisceau $B_{AZ}$ a une ouverture de 1 à 4° dans le plan de la figure et de 7,5° à 14° dans le plan vertical.

Sur la figure 2, on a illustré le fonctionnement de ce dispositif.

On a représenté, en fonction du temps, sur une ligne supérieure les émissions réalisées à partir de l'installation au sol. Il est donc émis à partir de cette installation le préambule $P_{AZ}$, suivi par le temps de balayage aller $A_Z$ du faisceau battant $B_{AZ}$, puis par le temps de balayage retour $R_Z$ de ce même faisceau. On a noté $F_{AZ}$ l'instant de fin de la fonction azimut.

Sur la ligne inférieure du diagramme de la figure 2, on a illustré, en négligeant le temps de propagation des signaux, les signaux reçus à bord de l'avion $A_V$. Ces signaux sont tout d'abord le préambule $P_{AZ}$, en principe identique au préambule émis, et une impulsion à chacun des moments (aller et retour) où l'avion $A_V$ sera éclairé par le faisceau $B_{AZ}$ de l'antenne sol ; ces deux impulsions sont repérées respectivement $A_{Z1}$ et $A_{Z2}$ et sont séparées par un intervalle de temps $\Delta t$.

Le préambule a, en plus de son rôle d'identification, un second rôle de fourniture d'une référence de temps : le préambule comporte une partie précédant le code d'identification et utilisant un code particulier, dit code BARKER, à cinq bits (11101), et la référence de temps (instant noté $t_{REF}$) est prise à l'instant de la transition 0-1. Le rôle de cette référence de temps est de permettre le décodage des informations dans le récepteur de bord. Dans le cas d'une fonction angulaire, l'instant milieu $(t_o)$ entre les balayages aller et retour a, d'après les normes OACI, une position temporelle fixe par rapport à l'instant $t_{REF}$ $(t_o - t_{REF} = T_M)$, et ce dans toute la zone couverte par le système ; ceci facilite le décodage et permet une validation de l'information d'angle. Dans le cas d'une fonction « données », l'instant $t_{REF}$ permet de réaliser un décodage correct des bits d'information.

La mesure, dans le récepteur de bord, du temps écoulé entre les crêtes des impulsions $A_{Z1}$ et $A_{Z2}$ fournit la valeur de l'angle d'azimut $\theta$ où se trouve l'avion, au moyen de la relation :

$$\theta = (T_o - \Delta t) \cdot \frac{V}{2}$$

où :

— $T_o$ est le temps écoulé entre les deux impulsions lorsque le récepteur est situé dans l'azimut 0° (sur l'axe de piste ZZ), temps déduit des normes OACI du système MLS ;

— V est la vitesse de balayage de l'antenne sol, qui est également normalisée ; elle correspond à une fréquence de répétition des balayages aller-retour de l'ordre de 13 ou 39 fois par seconde, suivant le type de station MLS.

On a également illustré sur la figure 2 deux droites fournissant la correspondance entre l'angle d'azimuth $\theta$ de l'avion et les instants d'émission et de réception des divers signaux et on a illustré les angles $-\theta_M$ et $+\theta_M$ maximaux de balayage du faisceau $B_{AZ}$.

Sur la figure 1b on a représenté, de façon analogue à ce qui a été fait sur la figure 1a, le principe de l'émission site.

Sur cette figure, on a donc représenté la station site S d'où sont émis deux faisceaux par deux antennes distinctes : l'une sectorielle, émettant le préambule site $P_S$ dont on a représenté le diagramme sur la figure, et l'autre émettant un faisceau battant plat $B_S$ balayant la zone de balayage d'angle noté $\beta_S$ balayage réalisé comme pour le faisceau battant azimut $B_{AZ}$.

Selon les normes OACI, l'angle d'ouverture du faisceau battant $B_S$ dans le plan de la figure est de 1° à 2° et, dans le plan perpendiculaire, de 80°.

Dans une telle station MLS, la présente invention se propose de répondre au problème d'une augmentation de la portée du système, sans augmentation de la puissance d'émission, ainsi qu'à celui d'un éventuel brouillage.

Comme il ressort de la description ci-dessus, le brouillage d'une fonction angulaire, par exemple, peut s'exercer soit au niveau du préambule, en brouillant l'émission de l'antenne sectorielle concernée, soit sur l'émission du faisceau battant fournissant l'information angulaire proprement dite, soit sur les deux. L'analyse des niveaux respectifs des émissions préambule et faisceau battant montre que le gain de l'antenne à balayage est supérieur à celui de l'antenne sectorielle d'une valeur théorique comprise entre 10 et 20 dB ; en pratique, les gains des antennes à balayage sont moins importants du fait que la réalisation de telles antennes est plus complexe et correspond à des pertes plus importantes, mais il reste toutefois supérieur à celui d'une antenne sectorielle. En outre, la couverture, dans le sens perpendiculaire au balayage, du faisceau battant azimut étant supérieure, toujours selon les normes OACI, à la largeur du faisceau battant site, l'antenne à balayage utilisée pour la fonction azimut présente un gain supérieur. Il en ressort que la partie du signal MLS la plus sensible au brouillage, car correspondant au niveau le plus faible, est le préambule rayonné par l'antenne sectorielle.

Il est connu, pour diminuer la vulnérabilité du signal MLS au brouillage, d'augmenter la puissance d'émission du préambule. Toutefois, cela comporte notamment deux inconvénients :

— son coût : compte tenu des puissances et des fréquences utilisées à l'heure actuelle, l'émetteur de l'antenne sectorielle est réalisée à l'aide de transistors ; une augmentation sensible de cette puissance d'émission nécessiterait le recours à un tube à ondes progressives, beaucoup plus onéreux ;

— la diminution de la discrétion du système : une augmentation de la puissance d'émission augmente la portée et donc la vulnérabilité à des contre-mesures éventuelles ;

— son efficacité très relative : une augmentation correspondante de la puissance du brouilleur repose entièrement le problème.

Il est également connu de renforcer le préambule à l'aide d'une antenne à balayage pointée successivement sur les différents angles de la couverture. Ce système est décrit notamment dans le brevet français n° 2 519 430 au nom de THOMSON-CSF. Toutefois dans ce système, le récepteur ne décode les préambules renforcés que lorsque l'antenne à balayage est pointée sur lui ; dans les intervalles, il n'est donc pas guidé, ce qui constitue un inconvénient.

Par ailleurs, en l'absence de brouillage, la portée d'une station MLS est définie par la portée du préambule rayonné par l'antenne sectorielle, dans la mesure où c'est le signal le plus faible. Un renforcement du préambule permet donc une augmentation de portée.

La présente invention a pour objet un procédé de renforcement du préambule pour augmenter la portée du système et le protéger contre le brouillage, ne présentant pas les inconvénients mentionnés ci-dessus.

Il consiste à émettre un préambule supplémentaire, pour chaque fonction ou groupe de fonctions, par l'intermédiaire de l'une des antennes à balayage utilisées par le système, de préférence l'antenne azimut, et ce pendant le temps où celle-ci n'est pas habituellement utilisée. Le préambule supplémentaire émis est ainsi susceptible d'être reçu et utilisé par des récepteurs spécialement équipés à cette fin et il est transparent pour les récepteurs classiques.

Le procédé selon l'invention est plus précisément défini par la revendication 1.

L'invention a également pour objet des moyens de mise en œuvre de ce procédé à l'émission et à la réception tels que définis dans les revendications 8 et 11.

D'autres objets, particularités et résultats de l'invention ressortiront de la description suivante, donnée à titre d'exemple non limitatif et illustrée par les dessins annexés qui représentent, outre les

**0 129 471**

figures 1a, 1b et 2 déjà décrites :

la figure 3, a et b, deux modes de réalisation du préambule supplémentaire utilisé dans le procédé selon l'invention ;

La figure 4, a et b, un premier mode de séquencement du préambule supplémentaire et des fonctions MLS dans le procédé selon l'invention ;

la figure 5, a et b, un deuxième mode de séquencement du préambule supplémentaire et des fonctions MLS dans le procédé selon l'invention ;

la figure 6, un mode de réalisation du dispositif de mise en œuvre de l'invention dans la station MLS au sol ;

la figure 7, un détail de la figure précédente ;

la figure 8, un mode de réalisation du dispositif de mise en œuvre de l'invention à bord d'un avion ;

la figure 9, une première variante de la figure 8 ;

la figure 10, une deuxième variante de la figure 8.

Sur ces différentes figures, les mêmes références se rapportent aux mêmes éléments.

Selon le procédé selon l'invention, on émet donc un préambule supplémentaire, également appelé « préambule renforcé », pour chaque fonction MLS ou pour un groupe de ces fonctions, ce préambule devant être émis par une antenne à balayage, et de préférence l'antenne utilisée pour la fonction azimut du fait que celle-ci a, comme exposé plus haut, un gain supérieur aux autres. Ce préambule renforcé doit remplir les deux fonctions classiques du préambule : l'identification de la ou des fonctions qui suivent et la référence de temps (instant appelé $t_{REF}$ renforcé). Selon l'invention, le préambule renforcé est émis avant le préambule normal de la (ou des) fonction considérée, par l'antenne à balayage azimut lorsque celle-ci n'est pas habituellement utilisée. Ce préambule est constitué par plusieurs balayages, au minimum trois allers ou retours se décomposant en deux allers et un retour ou un aller et deux retours, afin d'obtenir les deux fonctions mentionnées plus haut. De la sorte, un avion situé en n'importe quel point de la couverture du système MLS reçoit un message composé de plusieurs impulsions, qu'il peut utiliser comme préambule renforcé si le préambule habituel est brouillé. L'écart ($\Delta$) entre deux allers (ou deux retours) étant constant quelle que soit la position de l'avion dans la couverture, il est utilisé pour identifier la fonction ou le groupe de fonctions considéré ; un aller associé à un retour fournit, lui, la référence temps ($t_{REF}$ renforcé) recherchée, qui est prise comme le milieu d'une paire d'impulsions du fait que celui-ci a une position fixe quelle que soit la position de l'avion dans la couverture du système.

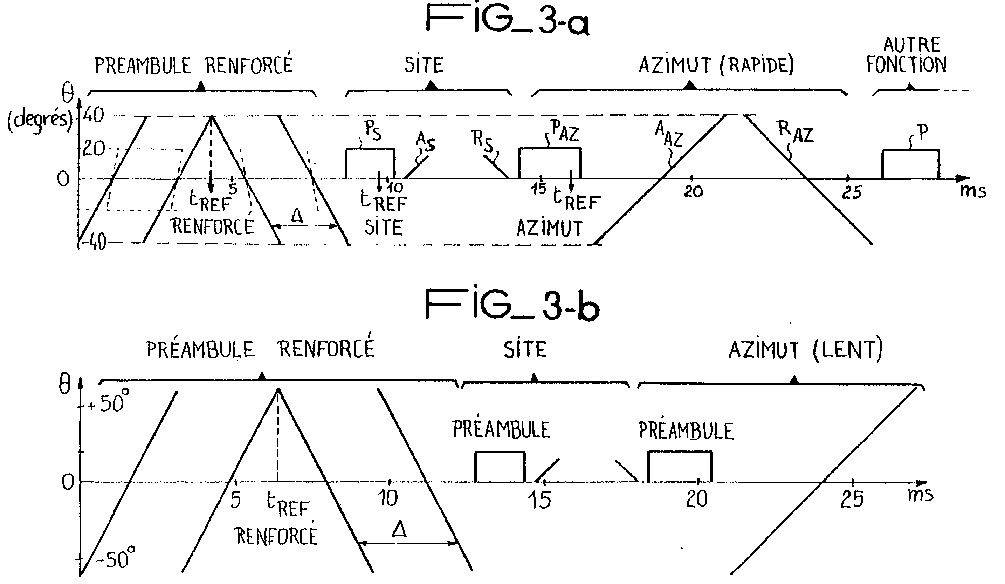

La figure 3a représente un mode de réalisation du préambule supplémentaire selon l'invention.

Sur cette figure, on a représenté en fonction du temps les angles $\theta$ d'émission du faisceau battant et de l'antenne sectorielle en fonction du temps.

Il est tout d'abord émis le préambule renforcé par l'antenne à balayage azimut. Il se compose de quatre balayages illustrés en traits continus, successivement deux allers et deux retours qui sont, dans ce mode de réalisation, réalisés à une vitesse angulaire de balayage double par rapport à ce qu'elle est pour la fonction azimut de façon à éviter une durée excessive de ce préambule renforcé. Les deux allers comme les deux retours sont séparés par l'intervalle de temps $\Delta$ d'identification.

Le préambule renforcé est suivi par la fonction site classique avec son préambule $P_S$, son balayage aller ($A_S$) et son balayage retour ($R_S$), séparés par l'intervalle de temps normalisé.

La fonction site est à son tour suivie par la fonction azimut, comportant de la même façon son préambule $P_{AZ}$, son balayage aller $A_{AZ}$ et son balayage retour $R_{AZ}$.

Ces deux fonctions peuvent être par exemple suivies par une autre des fonctions énumérées plus haut, commençant classiquement par son préambule P.

Il apparaît sur cette figure que le préambule renforcé est donc commun à trois fonctions, dont il ne modifie pas le déroulement normal. Une émission selon l'invention peut donc être normalement décodée par un récepteur OACI classique.

Sur la figure 3a ont été indiquées des données numériques d'angles et de temps telles que normalisées par l'OACI, avec une fonction azimut dite rapide, dont la cadence de renouvellement est de 39 Hz environ, utilisant une vitesse de balayage de 50 $\mu$s/degré sur $\pm$ 40° ; le préambule renforcé se caractérise alors par une vitesse de balayage double, c'est-à-dire 25 $\mu$s/degré, et l'écart $\Delta$ entre deux allers ou deux retours est de 2,176 ms et a les caractéristiques du groupe de fonctions qui suit ; la durée totale du préambule renforcé est alors de 8,704 ms.

L'avantage dans cette variante consistant à utiliser un préambule renforcé à quatre balayages est que la détection d'une paire d'impulsions à bord de l'avion est plus fiable vis-à-vis des perturbations (échos parasite ou brouillage) que celle d'une impulsion seule. Pour compenser l'allongement du préambule qui en résulte, on a donc choisi une vitesse de balayage double de la vitesse de balayage utilisée pour la fonction azimut.

La figure 3b représente un autre mode de réalisation du préambule renforcé selon l'invention, qui est encore constitué de quatre balayages mais qui diffère du précédent par la valeur choisie pour $\Delta$, qui peut être par exemple de 3,2 ms, dans le cas où on utilise une fonction azimut dite lente, c'est-à-dire d'un balayage sur $\pm$ 60° à la même vitesse (50 $\mu$s/degré), avec une cadence de renouvellement de 13 Hz environ, selon les normes OACI. La durée totale du préambule renforcé est, dans ce cas, de 12,8 ms.

Sur les figures 3, a et b, on a donc représenté un préambule renforcé commun aux fonctions site, azimut plus éventuellement une troisième fonction.

4

Selon une variante de l'invention (non représentée), on émet un préambule renforcé, toujours par l'antenne à balayage azimut, avant chaque fonction azimut ou site. Il est alors nécessaire de définir un écart Δ spécifique à chaque fonction pour permettre son identification. L'avantage de cette variante est un renforcement accru contre le brouillage ; son inconvénient en est l'utilisation d'un temps plus important et donc d'une diminution de la cadence d'information.

Selon une autre variante de l'invention, également non représentée, on utilise pour le préambule renforcé le nombre de balayages minimum, c'est-à-dire trois, de préférence dans l'ordre aller-aller-retour. L'identification est alors fournie par l'écart (Δ) entre les deux premières impulsions aller-aller et la référence de temps par le milieu entre les deux dernières impulsions aller-retour. Des considérations symétriques des précédentes s'appliquent : ce préambule triple est plus vulnérable au brouillage volontaire et aux multitrajets que le précédent, dans la mesure où il utilise une seule impulsion retour, mais il est moins encombrant sur le plan temps.

Une autre variante de l'invention (non représentée) consiste à utiliser un préambule renforcé à six balayages, selon par exemple l'une des trois séquences suivantes, avec A = aller, R = retour :

— AARRAA
— ARARAR
— AAARRR

Une autre variante de l'invention consiste à utiliser un préambule renforcé à huit balayages, selon par exemple l'une des séquences suivantes (avec la même notation) :

— AARRAARR
— AAAARRRR
— AAARRRAR

Dans le cas où on utilise un préambule renforcé à plus de trois impulsions, il est possible de réaliser à bord du récepteur une corrélation sur le message complet que constitue le préambule renforcé, ce qui permet de diminuer encore la vulnérabilité du préambule renforcé, dans un rapport fonction du nombre d'impulsions sur lequel on effectue la corrélation.

La vitesse de balayage utilisée dans le préambule renforcé est constante pendant tout le préambule, mais n'a pas à être forcément la même d'une station MLS à l'autre. Selon les normes OACI, la largeur du faisceau battant azimut peut avoir des valeurs différentes selon les installations, à savoir 1, 2, 3 ou 4°. Il est possible d'utiliser pour le préambule renforcé la même vitesse de balayage quelle que soit la largeur du lobe azimut. Ceci a pour inconvénient de compliquer le récepteur à bord de l'avion : les impulsions reçues par l'avion ont alors une durée variable en fonction de la largeur du lobe azimut, selon l'expression suivante :

$$\tau = 25 \cdot \theta$$

$\tau$ étant la durée exprimée en microsecondes à — 3 dB des impulsions reçues et $\theta$ la largeur en degrés à — 3 dB du lobe azimut. Afin d'éviter cette variation, on peut déterminer la vitesse du balayage utilisée pour le préambule renforcé en fonction de la largeur du lobe azimut selon la correspondance suivante :

| Largeur lobe azimut à–3dB | Vitesse de balayage préambule |
|---|---|
| 1° | 25 µs/degré |
| 2° | 12,5 µs/degré |
| 3° | 6,25 µs/degré |
| 4° | 3,125 µs/degré |

Sur la figure 3a, on a représenté à titre d'exemple en pointillé un préambule renforcé réalisé à une vitesse de 3,125 µs/degré, correspondant à un lobe de 4 degrés.

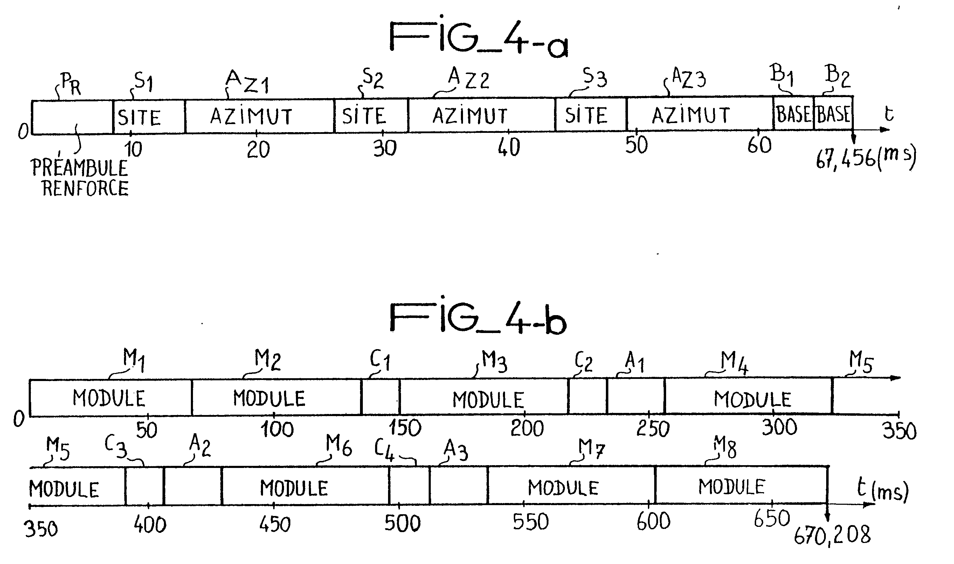

La figure 4a représente, à titre d'exemple, un module de base utilisé dans le procédé selon l'invention. On entend ici par « module » une réalisation particulière du séquencement de plusieurs fonctions qui suivent un même préambule renforcé.

Ce module comporte un préambule renforcé $P_R$, par exemple tel que décrit figure 3, a ou b, suivi par une première fonction site $S_1$, puis par une première fonction azimut rapide $A_{Z1}$, puis une seconde

5

fonction site $S_2$, une seconde fonction azimut rapide $A_{Z2}$, une troisième fonction site $S_3$, une troisième fonction azimut rapide $A_{Z3}$, un premier mot de données de base $B_1$ et enfin un second mot de données de base $B_2$. Avec un préambule renforcé d'une durée totale de 8,704 ms et la durée normalisée OACI de chacune des fonctions qui suivent (site : 5,632 ms ; azimut rapide : 11,904 ms ; mot de données de base : 3,072 ms), on obtient une durée totale du module de 67,456 ms.

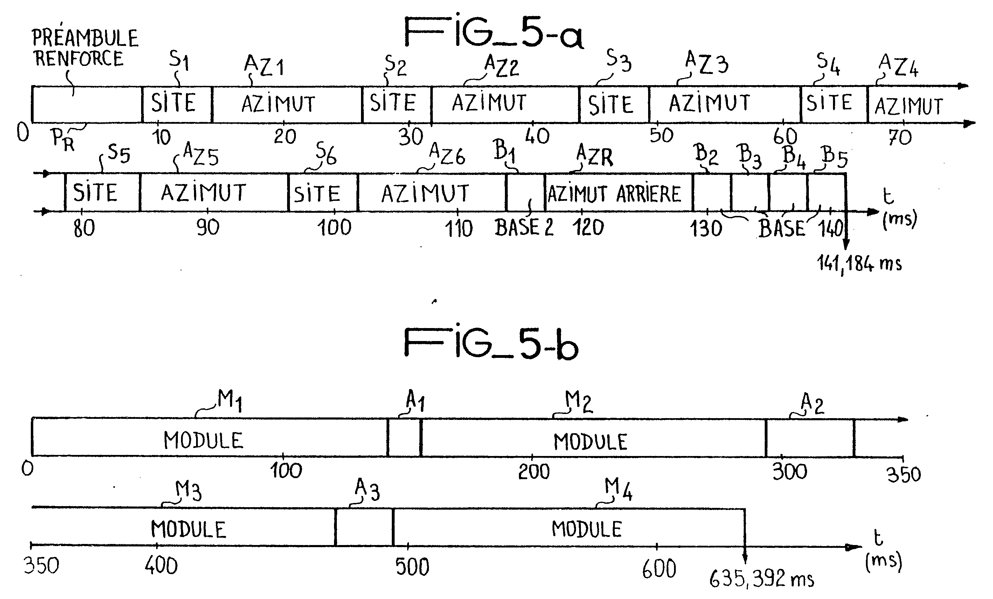

Il est à noter que la fonction azimut arrière n'est pas incluse dans le module de la figure 4a, ce qui signifie qu'elle n'est pas renforcée contre le brouillage. Il s'agit en effet d'une fonction de moindre importance par rapport aux fonctions azimut et site. Toutefois, elle peut être incluse dans un module, comme le montre la figure 5a ci-après.

La figure 4b définit un exemple de séquence temporelle complète selon l'invention, avec la répétition du module de la figure 4a entrecoupée d'informations supplémentaires, telles que données auxiliaires ou fonction azimut arrière, cette dernière étant précédée par une donnée de base portant le numéro 2 dans la nomenclature OACI, comme illustré sur le tableau ci-après ; les données de base figurant dans le module ($B_1$, $B_2$) sont alors les mots portant dans la nomenclature OACI un numéro autre que 2. Les durées indiquées sont soit la durée choisie pour le module de la figure 4, soit la durée normalisée OACI. La durée totale de la séquence obtenue est de 670,208 ms.

| FONCTION | DUREE (ms) |
|---|---|
| Module ($M_1$) | 67,456 |
| Module ($M_2$) | 67,456 |
| Mot de base N°2 + azimut arrière ($C_1$) | 14,976 |
| Module ($M_3$) | 67,456 |
| Mot de base N°2 + azimut arrière ($C_2$) | 14,976 |
| 4 mots de données auxiliaires ($A_1$) | 4 x 5,888 |
| Module ($M_4$) | 67,456 |
| Module ($M_5$) | 67,456 |
| Mot de base n° 2 + azimut arrière ($C_3$) | 14,976 |
| 4 mots de données auxiliaires ($A_2$) | 4 x 5,888 |
| Module ($M_6$) | 67,456 |
| Mot de base n° 2 + azimut arrière ($C_4$) | 14,976 |
| 4 mots données auxiliaires ($A_3$) | 4 x 5,888 |
| Module ($M_7$) | 67,456 |
| Module ($M_8$) | 67,456 |
| TOTAL | 670,208ms |

Les cadences de répétition correspondant à la séquence de la figure 4b sont les suivantes :
— azimut rapide : 35,81 Hz
— site : 35,81 Hz
— azimut arrière : 5,97 Hz
— mot de base n° 2 : 5,97 Hz
— données de base autre que le mot n° 2 : 23,87 mots/s
— données auxiliaires : 17,9 mots/s.

Il apparaît que la cadence des informations azimut et site est légèrement inférieure à la norme OACI ($39 \pm 1,5$ Hz). Toutefois une telle fréquence est largement suffisante compte tenu des temps de réponse des pilotes automatiques des avions actuels. Par ailleurs cette légère baisse de fréquence est sans incidence pratique sur le fonctionnement d'un récepteur OACI.

D'autre part, on peut constater dans le déroulement de la séquence de la figure 4b une irrégularité dans la période de répétition d'une fonction donnée qui est souhaitable de manière à éviter les éventuelles perturbations par réflexions synchrones (par exemple, réflexions sur des pales d'hélice).

La figure 5a représente un autre mode de réalisation du module utilisé dans le procédé selon l'invention. Ce module est plus long que celui représenté sur la figure 4a, c'est-à-dire qu'un préambule renforcé est suivi par davantage de fonctions, à savoir six fonctions site, six fonctions azimut rapide, une fonction

6

azimut arrière et cinq mots de données de base. Plus précisément, le préambule renforcé $P_R$ est suivi successivement par six couples de fonctions site ($S_1$-$S_4$) et azimut rapide ($A_{Z1}$-$A_{Z6}$), le mot n° 2 de données de base ($B_1$), une fonction azimut arrière $A_{ZR}$, et enfin quatre mots de données de base autre que le n° 2 ($B_2$-$B_5$).

Il apparaît que la cadence de renouvellement des fonctions site et azimut est plus grande que dans le cas de la figure 4 : par ailleurs, avec le même préambule renforcé que précédemment, on obtient une durée totale du module de 141,184 ms.

La figure 5b définit, de façon analogue à la figure 4b, une séquence comportant le module de la figure 5a.

Cette séquence comporte successivement un premier module $M_1$, deux mots de données auxiliaires ($A_1$), un second module $M_2$, six mots de données auxiliaires ($A_2$), un troisième module $M_3$, quatre mots de données auxiliaires ($A_3$) et enfin, pour finir la séquence, un quatrième module $M_4$.

Cette séquence a une durée totale de 635,392 ms, ce qui donne des cadences de répétition des informations azimut et site de 37,8 Hz, ce qui est à l'intérieur de la fourchette normalisée par l'OACI. Son inconvénient par rapport au mode de réalisation de la figure 4 est, bien entendu, d'être plus vulnérable au brouillage que celui-ci.

D'autres modules et d'autres séquences que ceux des figures 4 et 5 peuvent bien entendu être définis si on désire renforcer la protection contre le brouillage de certaines fonctions ou améliorer certaines caractéristiques : par exemple, augmentation de la cadence des données (de base ou auxiliaires), introduction de la fonction de guidage d'arrondi (« flare guidance » en anglais) ou d'azimut 360°.

Dans la description précédente, on a donné différentes variantes de préambules renforcés qui, une fois choisies, sont utilisées par la station MLS sans modification dans le temps. Afin de minimiser le risque de brouillage, le préambule renforcé étant susceptible d'être à la longue identifié, il est possible dans une variante de l'invention (non représentée) de faire varier la définition du préambule renforcé dans le temps, suivant un jeu de codes prédéfinis, le code étant changé périodiquement et de façon synchrone à la fois au niveau de l'émetteur sol et au niveau du récepteur embarqué à bord de l'avion, d'une façon analogue au codage ami-ennemi d'usage général. La variation du codage peut porter sur la variation de l'écart Δ séparant les paires d'impulsions. A titre d'exemple, on peut définir un jeu de seize codes différents au pas de 64 µs : en azimut rapide, $\Delta_i = 2\,176 + i.64$ µs, ou en azimut lent $\Delta_i = 3\,200 + i.64$ µs, i variant de 0 à 15. Dans le cas d'un préambule renforcé utilisant six balayages comme décrit plus haut, la variation du code peut encore être réalisée par une variation dans la succession des balayages aller et retour. Dans le cas de 6, 8 ou plus, balayages, il est possible de faire varier également les écarts Δ successifs entre impulsions, ces écarts n'étant pas nécessairement constants. Pour faire varier l'écart Δ entre deux impulsions, il est également possible d'introduire un temps mort entre deux balayages, ce qui permet de conserver la durée apparente (vue du récepteur de bord) des impulsions. Il est également possible de faire varier la vitesse de balayage, pour raccourcir ou allonger la durée du balayage. Le résultat en est une modification de la durée apparente des impulsions (vue du récepteur de bord), pour une largeur donnée du lobe azimut ; le codage peut alors être réalisé soit sur la largeur de l'impulsion reçue, soit sur l'écart entre impulsions, soit sur les deux.

Dans une autre variante, non représentée, il est possible d'émettre le préambule renforcé par l'antenne à balayage site ; bien que cette antenne ait généralement moins de gain que l'antenne à balayage azimut, elle a toutefois plus de gain que l'antenne sectorielle et son utilisation renforce donc le préambule.

Dans une autre variante, il est également possible de renforcer, vis-à-vis d'un brouillage, les mots de données de base ou de données auxiliaires qui sont émis habituellement par l'antenne sectorielle, de manière analogue au préambule. Ces données sont donc vulnérables au brouillage au même titre que le préambule. Dans le cas où on désire renforcer la transmission de certaines données jugées essentielles, il est possible de les émettre comme le préambule renforcé à l'aide du faisceau battant azimut, avec toutefois une cadence très réduite. Ces données sont alors émises classiquement (modulation DPSK) à des instants différents par l'antenne à balayage azimut pointée dans l'une des directions de la couverture puis, lors de l'émission suivante du même mot de données sur une direction voisine, etc. Dans une direction donnée, on ne reçoit donc ces données renforcées qu'à une cadence très faible. Selon une seconde méthode, on utilise encore une antenne à balayage pour lui faire effectuer une succession de balayages aller ou retour, précédés par un aller et retour, avec un codage en espacement : deux valeurs d'espacement différentes correspondant respectivement aux bits zéro et un ; à bord de l'avion est alors reçu un train d'impulsions représentant le mot de données.

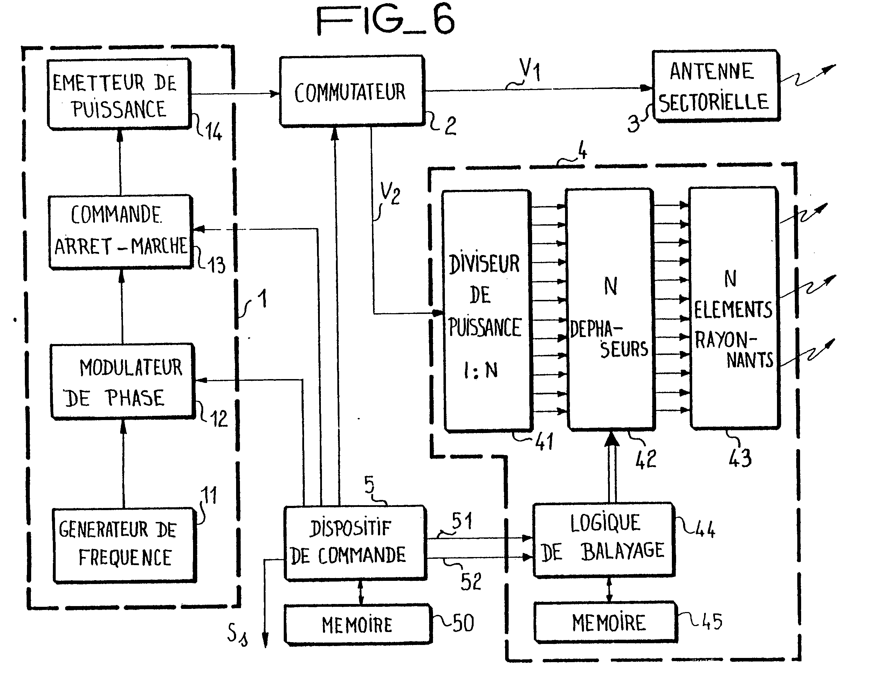

La figure 6 représente un mode de réalisation du dispositif de mise en œuvre au sol du procédé selon l'invention.

Ce dispositif comporte essentiellement un émetteur 1, deux antennes : une antenne sectorielle 3 et une antenne à balayage électronique 4, et différents circuits de commande (2, 5).

L'émetteur 1 comporte, en cascade : un générateur de fréquence 11, constitué par exemple par un synthétiseur de fréquence fournissant une onde voisine de 5 GHz selon la norme OACI (on rappelle que, selon cette norme, une fréquence parmi 200 fréquences prédéfinies, voisines de 5 GHz, est affectée à chaque station MLS) ; un modulateur de phase 12, réalisant une modulation de phase DPSK à deux états (0, π), permettant d'émettre le préambule et les données sur commande d'un dispositif logique de commande 5, tel qu'un microprocesseur ; un dispositif 13 de commande marche/arrêt, également commandé par le microprocesseur 5, et un émetteur de puissance 14, réalisé à tube ou à transistors selon la puissance requise, qui est classiquement de l'ordre de 20 W et donc le plus souvent réalisé à l'aide de transistors.

L'émetteur 1 fournit un signal, par l'intermédiaire d'un commutateur 2, soit sur une voie $V_1$ à l'antenne sectorielle 3 pour l'émission du préambule et des données, de base ou auxiliaires, soit sur une voie $V_2$ à l'antenne à balayage 4.

Cette dernière se décompose en un diviseur (ou répartiteur) de puissance 41, divisant la puissance reçue du commutateur 2 en N afin d'alimenter N déphaseurs numériques (bloc 42), lesquels alimentent N éléments rayonnants (bloc 43) ; les valeurs des déphasages introduits par les déphaseurs 42 sont commandées par un circuit logique de balayage 44, afin de réaliser un balayage électronique à partir d'éléments rayonnants statiques, ainsi qu'il est connu. On rappelle que, si on désire émettre un faisceau (de longueur d'onde λ) faisant un angle θ avec la normale à l'alignement des éléments rayonnants 43, le déphasage $\Delta\varphi_{0,i}$ introduit par un déphaseur de rang i ($1 \leqslant i \leqslant N$) est donné par :

$$\Delta\varphi_{\theta,i} = 2\,\pi i \cdot \frac{d}{\lambda} \cdot \sin\theta$$

où d est la distance entre deux éléments rayonnants successifs. Le circuit logique de balayage 44 est en général un circuit câblé, distinct du microprocesseur 5 (mais cela n'est pas impératif) à cause de la rapidité nécessaire ; ce circuit 44, sur ordre de départ du microprocesseur 5, effectue la commande des déphaseurs 42 de manière à assurer le balayage désiré par pointages successifs rapides du lobe de l'antenne ; les positions des déphaseurs 42 pour chaque pointage sont en général mises en mémoire (mémoire 45) dans des mémoires du type PROM. Le nombre N des déphaseurs 42 est couramment de l'ordre de 20 à 100.

L'ensemble du dispositif est donc commandé par le microprocesseur 5 et sa mémoire 50 (du type PROM par exemple), connecté à l'émetteur 1, au commutateur 2 et à l'antenne à balayage 4, par l'intermédiaire du circuit logique de balayage 44 ; le microprocesseur 5 fournit au circuit logique de balayage d'une part l'instant de départ du balayage pour les fonctions site ou azimut (flèche 51) et d'autre part l'instant de départ du balayage pour réaliser le préambule renforcé (flèche 52). La séquence selon l'invention, telle que représentée par exemple figure 4b ou 5b, est contenue dans la mémoire 50 du microprocesseur 5 ; dans le cas où le préambule renforcé utilise une vitesse de balayage différente (dans l'exemple ci-dessus : double) de celle de la fonction angulaire, la fréquence d'horloge utilisée par le circuit logique de balayage 44 est modifiée en conséquence, sur commande 52 du microprocesseur 5.

Le système au sol comporte généralement deux stations telles que celle qui est décrite figure 6 : l'une pour la fonction site et l'autre pour la fonction azimut. Une synchronisation est donc nécessaire ; elle est fournie par exemple par le microprocesseur 5 de la station azimut (flèche Ss).

Plus précisément, selon un mode de réalisation, on définit dans le microprocesseur 5 un « mot d'état » de la station, chaque bit de ce mot représentant une commande, dans l'exemple ci-dessus, ce mot comporte au moins six bits, commandant respectivement :
— le modulateur 12 ;
— la commande 13 ;
— le commutateur 2 ;
— la logique de balayage 44 (2 bits) ;
— la synchronisation site ($S_s$).

La génération en temps réel d'une séquence, telle que celle des figures 4b ou 5b, revient à engendrer en temps réel ce mot d'état, qui réalise ensuite les différentes commandes.

A cet effet, on range dans une table de la mémoire 50 la succession des mots d'état correspondant à la séquence désirée. Au rythme d'une horloge convenable (ici 64 μs), le microprocesseur 5 va chercher les mots d'état successifs et les fournit à une interface (non représentée), du type PIA (pour « Parallel Interface Adapter ») par exemple, qui commande les divers blocs.

Il est à noter que, du fait de la répétition de certaines des fonctions dans une même séquence, il est possible de diminuer l'espace mémoire nécessaire en le hiérarchisant : on mémorise alors autant de tables que de fonctions, une table principale définissant la séquence par appel des fonctions succesives.

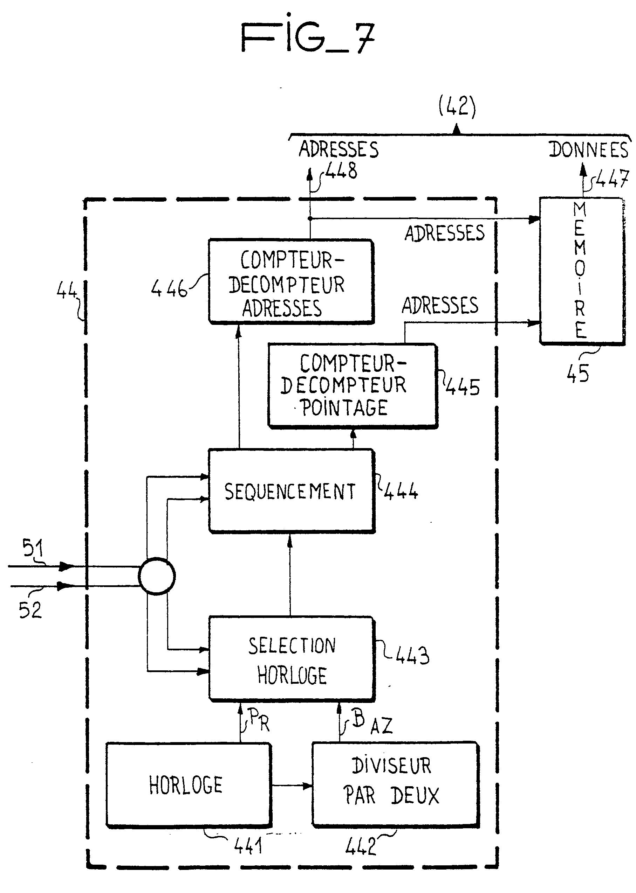

La figure 7 représente plus en détail un mode de réalisation des blocs de commande 44 et 45 de l'antenne à balayage.

On rappelle que la logique de balayage commande les déphaseurs 42 de manière à réaliser une succession de pointages voisins du lobe, simulant ainsi un balayage quasi-continu.

Les déphaseurs 42 sont par exemple des déphaseurs numériques 4 bits ; dans ce cas, ils permettent chacun de déphaser une onde entre 0 et 360° au pas de 22,5°. Les positions des N déphaseurs pour les pointages successifs (pas usuel : 0,1 à 0,2°) sont calculées au préalable et mémorisées (mémoire 45), sous forme de mots de 4 bits. Chacun des N déphaseurs est repéré par une adresse et la logique de balayage 44 a pour fonction de fournir successivement les valeurs des déphasages (bus de données 447) assorties de leurs adresses respectives (bus adresses 448) au bloc de déphaseurs 42.

A cet effet, le bloc logique 44 comporte :

— une horloge 441 et un diviseur par deux (442) du signal fourni par cette horloge, correspondant respectivement au préambule renforcé ($P_R$) et au balayage azimut ($B_{AZ}$) ;

— un dispositif logique 443 de sélection d'horloge, commandé (commandes 51 et 52) par le microprocesseur 5 ;

— un circuit logique de séquencement 444, commandant le déclenchement et le mode de fonctionnement de compteurs décompteurs 445 et 446, commandés également par le microprocesseur 5 ;

— un compteur-décompteur 445 pour le pointage du lobe : il fournit à chaque instant la valeur du pointage du lobe, qui est utilisée par la mémoire 45 comme l'adresse (partielle, voir ci-dessous) d'une donnée qu'elle fournit (bus 447) aux déphaseurs 42 ;

— un compteur-décompteur 446 pour les adresses des déphaseurs : pour un pointage donné du lobe (information fournie par le compteur-décompteur 445), il permet l'adressage successif des N déphaseurs : sa fréquence est donc N fois plus grande que celle du compteur 445.

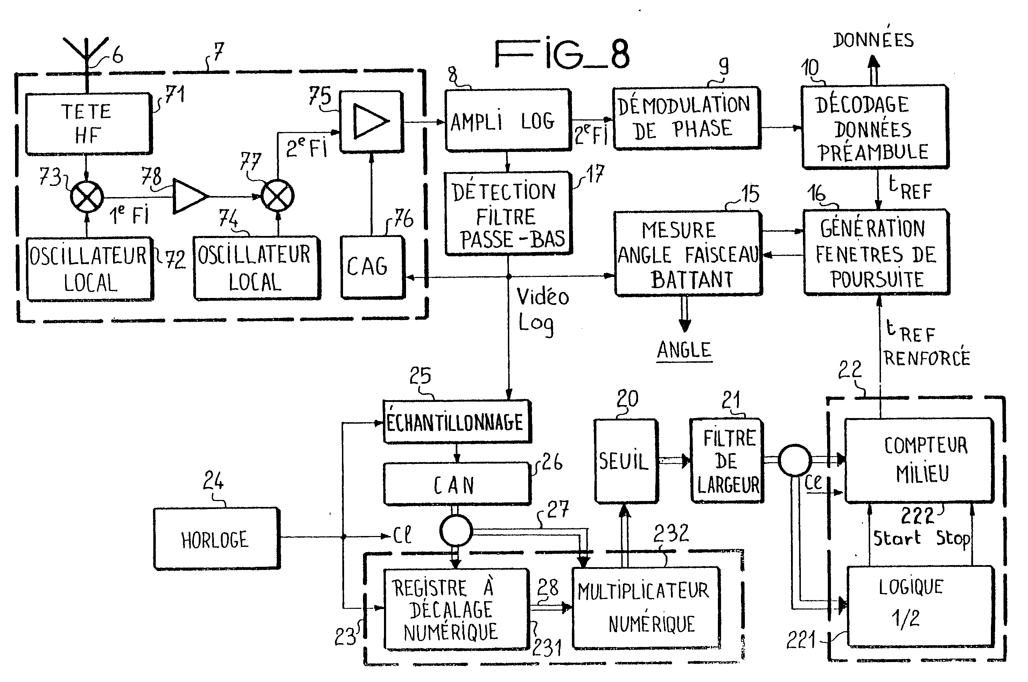

La figure 8 représente un mode de réalisation du dispositif de mise en œuvre du procédé selon l'invention embarqué à bord de l'avion.

Il comporte une antenne 6 de réception des signaux émis par la station sol, reliée à un récepteur 7 superhétérodyne à double changement de fréquence, classique. Le récepteur 7 comporte une tête HF 71 recevant le signal de l'antenne 6, le filtrant et l'amplifiant pour le fournir à un mélangeur 73 ; ce dernier reçoit par ailleurs une fréquence donnée d'un premier oscillateur local 72 qui lui permet de réaliser un premier changement de fréquence du signal reçu ; le signal issu du mélangeur 73, noté 1° FI, est transmis après amplification (78) à un deuxième mélangeur (77) qui, recevant par ailleurs un signal émis par un deuxième oscillateur local (74), réalise un deuxième changement de fréquence (signal noté 2° FI). Le signal 2° FI passe ensuite dans une chaîne d'amplification 75, commandée par un dispositif 76 de contrôle automatique de gain. Le récepteur 7 fournit donc le signal de sortie 2° FI, à fréquence intermédiaire en général choisie à 10,7 MHz, à un amplificateur logarithmique 8 fournissant, d'une part, une sortie à fréquence intermédiaire saturée pour permettre la démodulation des informations codées en DPSK par l'intermédiaire d'un démodulateur de phase 9, et, d'autre part, après détection et filtrage passe-bas (bloc 17), un signal « vidéo Log » qu'il fournit à un dispositif 15 de mesure d'angle à partir du faisceau battant ; la sortie « vidéo Log » est également fournie au dispositif de contrôle automatique de gain 76. Le signal démodulé par le démodulateur 9 est fourni à un dispositif de décodage 10, qui a pour fonction d'une part de fournir les données (données de base et données auxiliaires) et d'autre part de décoder les préambules afin de fournir d'une part l'identification de la fonction et d'autre part la référence de temps ($t_{REF}$) pour la génération par un dispositif 16 de fenêtres de poursuite symétriques sur le faisceau battant ; ce dernier travaille en relation réciproque avec le dispositif 15 de mesure d'angle. On rappelle que cet ensemble 15-16 fonctionne de la façon suivante :

— dans une première phase d'acquisition, il est procédé à une recherche des maxima des impulsions reçues ;

— dans une seconde phase, on engendre des fenêtres de réception, symétriques par rapport à l'instant $t_0$ (figure 2) déterminé à partir de l'instant $t_{REF}$ donné par le préambule : $t_0 = t_{REF} + T_M$ avec $T_M$, durée fixée par les normes OACI pour chaque fonction angulaire ;

— dans une troisième phase, on réalise la mesure du temps entre les impulsions reçues dans les fenêtres, correspondant respectivement à un balayage aller et un balayage retour, et on corrige la position de fenêtres à partir de la mesure temporelle effectuée ; on en déduit l'angle recherché (azimut ou site).

Les éléments 6 à 10 et 15 à 17 sont notamment décrits dans un document de la FAA-DOT-USA proposant à l'OACI un MLS type TRSB (pour « Time Reference Scanning Beam) (éd. déc. 75, vol. I, paragraphe 2.4.2).

Le signal « vidéo Log » délivré par le dispositif 17 est en outre adressé à un convertisseur analogique-numérique 26, après échantillonnage (bloc 25) dans le temps au rythme d'une horloge 24, qui délivre un signal repéré CI. A titre d'exemple, une période d'échantillonnage de l'ordre de 4 ou 5 μs convient parfaitement. Le signal numérique, sur n bits, est transmis à un dispositif 23 de reconnaissance et de validation du préambule renforcé, par corrélation par exemple, comportant : un registre à décalage numérique 231, qui retarde le signal d'une valeur Δ sur commande du signal d'horloge CI, et un circuit multiplicateur numérique 232, qui effectue en temps réel le produit des signaux numériques échantillonnés non retardés (entrée 27 sur n bits provenant du dispositif 26) et retardés (entrée 28 sur n bits provenant du registre 231). Sur la sortie de ce multiplicateur 232 est donc disponible un signal présentant un maximum lors de la réception d'une paire d'impulsions séparées par l'intervalle Δ recherché. Ce signal est transmis (toujours sur n bits) à un circuit logique à seuil 20, qui ne retient que les pics de corrélation supérieurs à un seuil prédéfini. Ce circuit à seuil est suivi par un circuit logique discriminateur de largeur 21, également appelé filtre de largeur, éliminant les réponses n'ayant pas la largeur attendue. Ce filtre est utile dans le cas où le préambule renforcé est composé d'impulsions reçues de largeur constante. Le signal en sortie du filtre de largeur, toujours sur n bits, est transmis à un circuit 22 ayant pour fonction de déterminer l'intant $t_{REF}$ renforcé. Il comporte un compteur 222, recevant les impulsions fournies par le filtre de largeur 21 et le signal d'horloge CI, et un circuit logique 221, recevant également les mêmes impulsions et permettant de distinguer la première de la deuxième, afin de faire démarrer (start) ou d'arrêter (stop) le compteur 222 ; ce circuit 221 peut être un diviseur par deux ou une bascule logique par exemple.

La description faite ci-dessus permet de décoder et traiter une seule fonction angulaire. La séquence MLS comportant une alternance de plusieurs fonctions angulaires repérées par leur préambule, il est nécessaire pour toutes les traiter de dupliquer ou tripliquer certains des circuits de la figure 7, notamment le dispositif 16 de génération de fenêtres de poursuite et la mesure angulaire réalisée par le dispositif 15.

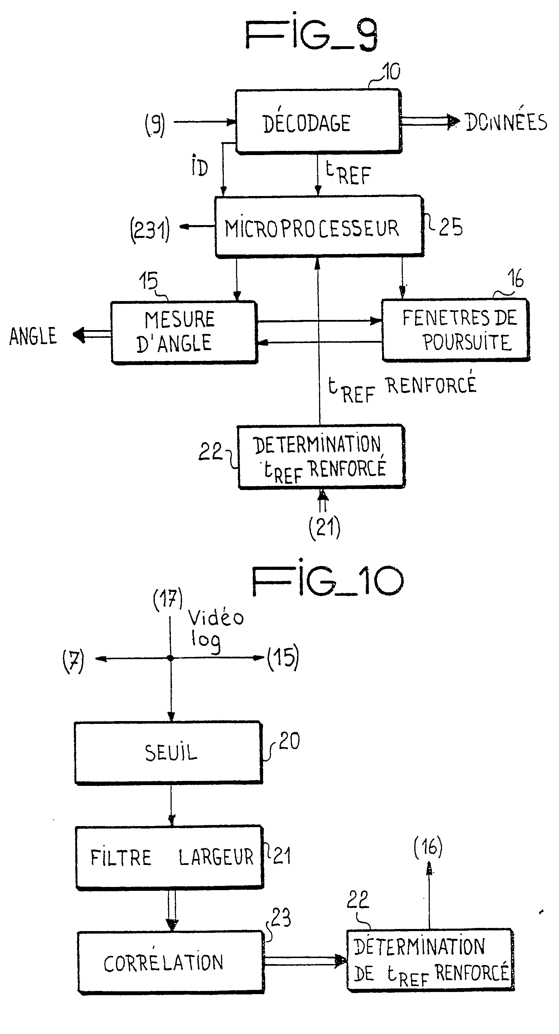

La figure 9 représente une variante de la figure 7 dans laquelle on évite la multiplication des circuits par l'utilisation d'un microprocesseur.

A cet effet, le dispositif 10 décodant le préambule (et les données) fournit l'instant de référence ($t_{REF}$) et l'identification (ID) de la fonction azimut ou de la fonction site à un microprocesseur 25, lequel fournit les informations nécessaires aussi bien au dispositif 16 de génération de fenêtres de poursuite qu'au dispositif de mesure d'angle 15. Par ailleurs, le dispositif 22 de détermination de l'instant $t_{REF}$ renforcé fournit maintenant son information au microprocesseur 25 et non plus directement au dispositif 16. Enfin, le microprocesseur 25 commande également le registre à décalage 231, afin d'adapter le retard aux différentes fonctions. Dans une variante, la durée $\Delta$ du retard conféré par le registre 231 peut-être affichable manuellement sur ce dernier.

De la sorte, les différents paramètres de traitement (angle, tension, CAG, etc.) correspondant aux différentes fonctions peuvent être mis en mémoire puis appelés en fonction de l'information d'identification décodée dans le préambule.

La figure 10 représente une autre variante de réalisation du récepteur embarqué à bord de l'avion.

Dans cette variante, le signal « vidéo Log » issu du dispositif 17 est transmis non plus à un échantillonneur mais directement au dispositif à seuil 20, qui le transforme en un signal logique à deux états. Ce signal est transmis au filtre de largeur 21 puis au circuit de corrélation 23, celui-ci transmettant le signal qu'il produit au circuit 22 de détermination de $t_{REF}$ renforcé.

Cette solution a l'avantage de permettre la suppression de l'échantillonneur et du convertisseur analogique-numérique d'une part et de simplifier le circuit de corrélation d'autre part. En effet, celui-ci comme précédemment utilise un registre à décalage numérique mais qui fonctionne maintenant sur un seul bit au lieu de n bits précédemment et le circuit de multiplication opérant la multiplication entre le signal retardé et le signal non retardé n'a plus à multiplier que deux chiffres d'un seul bit, ce qui le simplifie également considérablement.

Toutefois cette solution présente une sensibilité au brouillage accrue, du fait que la sélection des impulsions par le circuit à seuil et le filtrage de largeur sont réalisés avant corrélation au lieu de l'être après, comme sur la figure 8.

Selon une autre variante de la figure 8, non représentée, le circuit de corrélation 23 est remplacé par un compteur, mesurant l'écart entre deux impulsions successives ; si l'écart n'est pas celui ($\Delta$) qui est recherché, les impulsions sont rejetées. Cette variante a l'avantage d'être plus simple, mais présente des difficultés au niveau de l'initialisation du comptage et l'inconvénient d'être globalement plus sensible au brouillage.

## Revendications

1. Procédé d'augmentation de portée d'un système MLS, comportant une pluralité d'étapes successives d'émission d'une fonction MLS, chaque fonction comportant un préambule qui précède la fonction proprement dite et qui comprend une information d'identification relative à cette fonction ainsi qu'une information constituant une référence de temps, ledit procédé étant caractérisé par le fait qu'il comporte, de plus, au moins une étape d'émission d'un préambule supplémentaire, dit préambule renforcé, celui-ci comportant au moins deux balayages de type aller et un balayage de type retour, ou au moins un balayage aller et deux balayages retour d'un secteur prédéterminé par un faisceau à microondes ayant un diagramme d'émission étroit dans la direction de balayage, l'intervalle de temps ($\Delta$) entre deux balayages de même type constituant une information d'identification pour au moins la première fonction qui suit le préambule renforcé, et l'instant milieu de l'ensemble formé par un balayage aller suivi d'un balayage retour constituant une information de référence temporelle ($t_{REF}$ renforcé) pour au moins la première fonction qui suit le préambule renforcé.

2. Procédé selon la revendication 1, caractérisé par le fait que le préambule renforcé est constitué par deux balayages aller et deux balayages retour.

3. Procédé selon l'une des revendications précédentes, caractérisé par le fait que le préambule renforcé est placé en tête d'une série de fonctions, appelée module (M), comportant une ou plusieurs des fonctions MLS connues telles que les fonctions azimut rapide, azimut lent, site, données de base, données auxiliaires, azimut arrière, guidage d'arrondi.

4. Procédé selon l'une des revendications précédentes, caractérisé par le fait qu'un préambule renforcé est placé en tête d'une série de fonctions, appelée module (M), comportant plusieurs couples fonction azimut-fonction site.

5. Procédé selon l'une des revendications 3 ou 4, caractérisé par le fait que le module comporte successivement : une fonction site, une fonction azimut, une fonction site, une fonction azimut, une fonction site, une fonction azimut et deux mots de données de base.

6. Procédé selon l'une des revendications 3, 4 ou 5, caractérisé par le fait qu'une pluralité de modules sont émis successivement, formant une séquence répétitive, une ou plusieurs des fonctions assurées par le système MLS étant insérées entre les modules.

7. Procédé selon l'une des revendications précédentes, caractérisé par le fait que l'intervalle de temps (Δ) entre deux balayages de même type et/ou l'instant milieu ($t_{REF}$ renforcé) sont variables dans le temps selon une loi prédéfinie.

8. Dispositif émetteur pour la mise en œuvre du procédé selon l'une des revendications précédentes, susceptible d'émettre au moins une fonction azimut ou une fonction site, une fonction données de base et une fonction données auxiliaires, chaque fonction comportant un préambule précédant la fonction proprement dite et comprenant une information d'identification relative à cette fonction ainsi qu'une information constituant une référence de temps, le dispositif émetteur comportant :
— des moyens émetteurs (1) ;
— une antenne sectorielle (3), assurant l'émission des préambules, des données de base et des données auxiliaires, sous forme d'une onde porteuse modulée en phase par les informations à transmettre, fournie par les moyens émetteurs ;
— une antenne à balayage électronique (4), assurant l'émission des fonctions angulaires sous forme de balayages allers et retours d'un faisceau à microondes fourni par les moyens émetteurs ;
— des moyens de commutation (2) entre les moyens émetteurs (1) d'une part et les antennes sectorielles (3) et à balayage (4) d'autre part ;
— des moyens de commande (5), assurant le séquencement des émissions précédentes,
le dispositif émetteur étant caractérisé par le fait que les moyens de commande (5) sont susceptibles d'effectuer, par l'intermédiaire de l'antenne à balayage électronique, l'émission d'un préambule supplémentaire, dit préambule renforcé, consistant en un cycle de balayages du secteur couvert par ladite antenne, ledit cycle comportant au moins deux balayages de type aller et un balayage de type retour, ou au moins un balayage aller et deux balayages retour, l'intervalle de temps (Δ) entre deux balayages de même type constituant une information d'identification pour au moins la première fonction qui suit le préambule renforcé, et l'instant milieu de l'ensemble formé par un balayage aller suivi d'un balayage retour constituant une information de référence temporelle ($t_{REF}$ renforcé) pour au moins la première fonction qui suit le préambule renforcé.

9. Dispositif selon la revendication 8, caractérisé par le fait que les moyens de commande (5) assurent la commande des moyens émetteurs (1), des moyens de commutation (2) et de l'antenne à balayage (4) au moyen d'un mot d'état, comportant autant de bits que de commandes à réaliser, les différents mots d'états successifs étant stockés dans une mémoire (50).

10. Dispositif selon l'une des revendications 8 ou 9, caractérisé par le fait que l'antenne à balayage (4) comporte :
— un ensemble de N déphaseurs (42) ;
— N éléments rayonnants (43) reliés respectivement aux déphaseurs ;
— un circuit logique de commande (44) des déphaseurs, recevant des moyens de commande (5) le type du balayage à réaliser : fonction angulaire ou préambule renforcé, et l'instant de début de ce balayage.

11. Dispositif récepteur pour la mise en œuvre du procédé selon l'une des revendications 1 à 7, susceptible de recevoir un signal constituant au moins une fonction azimut, une fonction site, une fonction données de base et une fonction données auxiliaires, chaque fonction comportant un préambule précédant la fonction proprement dite et comprenant une information d'identification relative à cette fonction ainsi qu'une information constituant une référence de temps, le dispositif récepteur comportant :
— une antenne de réception (6) ;
— des moyens récepteurs (7) recevant le signal capté par l'antenne et délivrant un signal à fréquence intermédiaire ;
— des moyens de démodulation et de décodage (9, 10) du signal à fréquence intermédiaire, fournissant les données de base ou auxiliaires et l'identification et la référence temporelle ($t_{REF}$) contenues dans le préambule ;
— des moyens (17) fournissant un signal vidéo (vidéo log) à partir du signal fourni par les moyens récepteurs (7) ;
— des moyens (15) de mesure d'angle à partir du signal vidéo et de la référence temporelle ($t_{REF}$) ; caractérisé par
— des moyens de traitement destinés à détecter, dans le signal reçu, un préambule supplémentaire, dit préambule renforcé, créé lors d'un cycle de balayages de l'antenne de réception par un des faisceaux battants d'un système MLS, ledit cycle précédant la réception d'au moins une desdites fonctions et comportant au moins deux balayages de type aller et un balayage de type retour, ou au moins un balayage aller et deux balayages retour, les moyens de traitement comportant en cascade :
— des moyens (25, 26, 20) de conversion en un signal numérique du signal vidéo ;
— des moyens (23) de reconnaissance et de validation du préambule renforcé à partir de l'intervalle (Δ) de temps entre deux balayages de même type ;

— des moyens pour déterminer l'instant milieu de l'ensemble formé par un balayage aller suivi d'un balayage retour et pour en dériver une information constituant une référence temporelle ($t_{REF}$ renforcé) contenue dans le préambule renforcé, à destination des moyens de mesure d'angle (15).

12. Dispositif selon la revendication 11, caractérisé par le fait que les moyens de conversion numérique du signal vidéo (vidéo log) comportent un échantillonneur (25) et un convertisseur analogique-numérique (26) et qu'il comporte de plus un dispositif à seuil (20), connecté après les moyens (23) de reconnaissance et de validation du préambule renforcé.

13. Dispositif selon la revendication 11, caractérisé par le fait que les moyens de conversion en numérique comportent un dispositif à seuil (20).

14. Dispositif selon l'une des revendications 12 ou 13, caractérisé par le fait que le dispositif à seuil (20) est suivi par un circuit discriminateur de largeur (21).

15. Dispositif selon l'une des revendications 11 à 14, caractérisé par le fait que les moyens (23) de reconnaissance et de validation du préambule renforcé réalisent une corrélation au moyen d'un registre à décalage (231), retardant le signal qu'il reçoit de l'intervalle (Δ) de temps entre deux balayages de même type, et d'un multiplicateur (232), recevant le signal d'entrée et le signal de sortie du registre à décalage et réalisant leur multiplication.

**Claims**

1. A method for increasing the range of a MLS system, comprising a plurality of consecutive steps of transmitting a MLS function, each function including a preambel which precedes the real function and, which comprises and identification information relating to this function and a time reference information, characterized in that it further comprises at least one step in which an additional preambel, called reinforced preambel, is transmitted, the latter including at least two scans in a first direction and one scan of the return type, or at least one scan in the first direction and two return scans over a predetermined sector by a microwave beam having a narrow transmission lobe in the scan direction, the time interval (Δ) between two scans of the same type constituting an identification information for at least the first function consecutive to the reinforced preambel, and the central instant of the sequence of a scan in the first direction and a return scan constituting a time reference information ($t_{REF}$ reinforced) for at least the first function following the reinforced preambel.

2. A method according to claim 1, characterized in that the reinforced preambel is constituted by two scans in the first direction and two return scans.

3. A method according to one of the preceding claims, characterized in that the reinforced preambel precedes a series of functions, called module (M), comprising one or several known MLS functions such as the functions : fast azimut, slow azimut, elevation, basic data, auxiliary data, rear azimut, rounding off guidance.

4. A method according to one of the preceding claims, characterized in that a reinforced preambel precedes a series of functions, called module (M), comprising a plurality of pairs azimut function — elevation function.

5. A method according to one of claims 3 or 4, characterized in that the module comprises successively : an elevation function, an azimut function, an elevation function, an azimut function, an elevation function, an azimut function and two words of basic data.

6. A method according to one of claims 3, 4 or 5, characterized in that a plurality of modules are transmitted in succession, constituting a repeating sequence, one or several of the functions provided by the MLS system being inserted between the modules.

7. A method according to one of the preceding claims, characterized in that the time interval (Δ) between two scans of the same type and/or the central instant ($t_{REF}$ reinforced) vary with time according to a predefined law.

8. A transmitter device for implementing the method according to one of the preceding claims, conceived to transmit at least an azimut function or an elevation function, a basic data function and an auxiliary data function, each function comprising a preambel preceding the real function and comprising an identification information relating to this function and an information constituting a time reference, the transmitter device including :

— transmitter means (1) ;

— a sector antenna (3) providing for the transmission of the preambels, the basic data and the auxiliary data, in the form of a carrier wave which is phase modulated by the informations to be transmitted and supplied by the transmitter means ;

— an electronically scanned antenna (4) conceived to transmit the angular functions in the form of to and fro scans of a microwave beam supplied by the transmitter means ;

— means (2) for switching between the transmitter means (1) on the one hand and the sector antenna (3) and the scanned antenna (4) on the other hand ;

— control means (5) conceived to control the sequence of said transmissions, characterized in that the control means (5) are made to allow, via the electronically scanned antenna, an additional preambel, called reinforced preambel, to be transmitted, the latter consisting of a cycle of scans over the sector covered by this antenna, said cycle comprising at least two scans in the first direction and one return scan, or at least one scan in the first direction and two return scans, the time interval ($\Delta$) between two scans of the same type constituting an identification information for at least the first function following the reinforced preambel, and the central instant of the sequence constituted by a scan in the first direction and a return scan constituting a time reference information ($t_{REF}$ reinforced) for at least the first function following the reinforced preambel.

9. A device according to claim 8, characterized in that the control means (5) are conceived to control the transmitter means (1), the switch means (2) and the scanned antenna (4) by means of a status word which contains as many bits are there are controls to be realized, the different successive status words being stored in a memory (50).

10. A device according to one of claims 8 or 9, characterized in that the scanned antenna (4) comprises :
— a group of N phase shifters (42) ;
— N radiating elements (43) connected to the phase shifters respectively,
— a logic circuit (44) for controlling the phase shifters, receiving from the control means (5) the information concerning the type of scan to be performed : angular function or reinforced preambel, and the instant at which the scan should start.

11. A receiver device for implementing the method according to one of claims 1 to 7, conceived to receive a signal constituting at least an azimut function, an elevation function, a basic data function and an auxiliary data function, each function comprising a preambel preceding the real function and comprising an identification information relating to this function and an information constituting a time reference, the receiver device including
— a receive antenna (6) ;
— receive means (7) which receive the antenna signal and deliver an intermediate frequency signal ;
— means (9, 10) for demodulating and decoding the intermediate frequency signal, these means supplying the basic data or auxiliary data and the identification and time reference ($t_{REF}$) contained in the preambel ;
— means (17) supplying a video signal (video log) in reply to the signal supplied by the receive means (7) ;
— means (15) for measuring the angle on the basis of the video signal and of the time reference ($t_{REF}$), characterized by
— processor means, conceived to detect form the received signal an additional preambel, called reinforced preambel, created in the course of a receive antenna scan cycle by one of the scanning beams of a MLS system, said cycle preceding the reception of at least one of said functions and comprising at least two scans in the first direction and one scan of the return type, or at least one scan in the first direction and two return scans, the processing means comprising in a cascade configuration :
— means (25, 26, 20) for converting the video signal into a digital signal ;
— means (23) for detecting and validating the reinforced preambel on the basis of the time interval ($\Delta$) between two scans of the same type ;
— means for determining the central instant of the sequence constituted by a scan in the first direction and a return scan, and for deriving therefrom an information defining a time reference ($t_{REF}$ reinforced) contained in the reinforced preambel, for the attention of the angle measuring means (15).

12. A device according to claim 11, characterized in that the means for converting the video signal (video log) into a digital signal include a sampler (25) and an analog-to-digital converter (26), and that the device further comprises a threshold unit (20), inserted downstream of the means for detecting and validating the reinforced preambel.

13. A device according to claim 11, characterized in that the means for converting into a digital signal include a threshold unit (20).

14. A device according to one of claims 12 or 13, characterized in that the threshold unit (2) is followed by a width discriminator circuit (21).

15. A device according to one of claims 11 to 14, characterized in that the means (23) for detecting and validating the reinforced preambel perform a correlation by means of a shift register (231) which is conceived to delay the received signal by the time interval ($\Delta$) between two scans of the same type, and by means of a multiplier (232) which receives the input signal and the output signal of the shift register and calculates their product.

**Patentansprüche**

1. Verfahren zur Bereichserweiterung eines Mikrowellen-Landesystems (MLS), mit Zahlreichen aufeinanderfolgenden Aussendungen einer MLS-Funktion, wobei jede Funktion eine die eigentliche Funktion einleitende Präambel aufweist, die eine diese Funktion identifizierende Information sowie eine einen Zeitbezugswert bildende Information enthält, dadurch gekennzeichnet, daß mindestens ein weiterer Verfahrensschritt vorliegt, in dem eine zusätzliche Präambel, verstärkte Präambel genannt, ausgesandt wird, die zwei Schwenks in einer Richtung und einen Schwenk in Gegenrichtung oder mindestens einen Schwenk in der ersten Richtung und zwei Schwenks in Gegenrichtung über einen vorgegebenen mit einem Mikrowellenstrahl enthält, der ein schmales Sendediagramm in Schwenkrichtung besitzt, wobei das Zeitintervall ($\Delta$) zwischen zwei gleichartigen Schwenks eine Identifikationsinformation zumindest für die erste der verstärkten Präambel folgende Funktion bildet, während der mittlere Zeitpunkt der Folge aus einem Schwenk in der ersten Richtung und einem Schwenk in der Gegenrichtung eine Zeitbezugsinformation ($t_{REF}$ verstärkt) zumindest für die erste der verstärkten Präambel folgende Funktion bildet.

2. Verfahren nach Anspruch 1, dadurch gekennzeichnet, daß die verstärkte Präambel von zwei Schwenks in der ersten Richtung und zwei Schwenks in der Gegenrichtung gebildet wird.

3. Verfahren nach einem der vorhergehenden Ansprüche, dadurch gekennzeichnet, daß die verstärkte Präambel am Kopf einer Modul (M) genannten Serie von Funktionen angeordnet ist, die eine oder mehrere der bekannten MLS-Funktionen enthält, wie z. B. die Funktionen Azimut rasch, Azimut langsam, Elevation, Basisdaten, Hilfsdaten, Azimut rückwärts, abgerundete Führung.

4. Verfahren nach einem der vorhergehenden Ansprüche, dadurch gekennzeichnet, daß die verstärkte Präambel am Kopf einer Modul (M) genannten Serie von Funktionen angeordnet ist, die mehrere Paare Azimutfunktion-Elevationsfunktion aufweist.

5. Verfahren nach Anspruch 3 oder 4, dadurch gekennzeichnet, daß der Modul nacheinander enthält : eine Elevationsfunktion, eine Azimutfunktion, eine Elevationsfunktion, eine Azimutfunktion, eine Elevationsfunktion, eine Azimutfunktion und zwei Basisdatenwörter.

6. Verfahren nach einem der Ansprüche 3, 4 oder 5, dadurch gekennzeichnet, daß zahlreiche Module nacheinander ausgesandt werden, die eine sich wiederholende Sequenz bilden, wobei eine oder mehrere MLS-Funktionen zwischen die Module eingefügt werden.

7. Verfahren nach einem der vorhergehenden Ansprüche, dadurch gekennzeichnet, daß das Zeitintervall ($\Delta$) zwischen zwei Schwenks derselben Richtung und/oder der mittlere Zeitpunkt ($t_{REF}$ verstärkt) nach einem vorgegebenen Gesetz zeitvariabel sind.

8. Sendevorrichtung zur Durchführung des Verfahrens nach einem der vorhergehenden Ansprüche, die mindestens eine Azimut- oder eine Elevationsfunktion, eine Funktion Basisdaten und eine Funktion Hilfsdaten aussenden kann, wobei jede Funktion eine der eigentlichen Funktion vorhergehende Präambel enthält, die eine Identifikationsinformation bezüglich dieser Funktion sowie eine einen Zeitbezugswert bildende Information aufweist, und wobei die Sendevorrichtung enthält :
— Sendemittel (1) ;
— eine Sektorantenne (3), die die Präambeln, die Basisdaten und die Hilfsdaten in Form einer mit den von den Sendemitteln gelieferten zu übertragenden Informationen phasenmodulierten Trägerwelle aussendet ;
— eine elektronisch schwenkbare Antenne (4), die die Winkelfunktionen in Form von Schwenks eines von den Sendemitteln gelieferten Mikrowellenstrahls in der ersten Richtung und in Gegenrichtung aussendet ;
— Mittel (2) zum Umschalten zwischen den Sendemitteln (1) einerseits und der Sektorantenne (3) und der schwenkbaren Antenne (4) anderseits ;
— Steuermittel (5), die die Abfolge der genannten Sendevorgänge bestimmen, dadurch gekennzeichnet, daß die Steuermittel (5) über die elektronisch schwenkbare Antenne eine zusätzliche Präambel, verstärkte Präambel genannt, aussenden können, die aus einem Zyklus von Schwenks über den von dieser Antenne erfaßten Sektor besteht, wobei dieser Zyklus mindestens zwei Schwenks in einer Richtung und einen Schwenk in Gegenrichtung oder mindestens eine Schwenk in der ersten Richtung und zwei Schwenks in Gegenrichtung aufweist und wobei das Zeitintervall ($\Delta$) zwischen zwei Schwenks in derselben Richtung eine Identifikationsinformation zumindest für die erste der verstärkten Präambel folgende Funktion bildet, während der mittlere Zeitpunkt einer Folge aus einem Schwenk in der ersten Richtung und einem Schwenk in der Gegenrichtung eine Zeitbezugsinformation ($t_{REF}$ verstärkt) zumindest für die erste der verstärkten Präambel folgende Funktion bildet.

9. Vorrichtung nach Anspruch 8, dadurch gekennzeichnet, daß die Steuermittel (5) die Steuerung der Sendemittel (1), der Umschaltmittel (2) und der schwenkbaren Antenne (4) mithilfe eines Zustandsworts bewirken, das ebensoviele Bits besitzt, wie Steuerungen durchzuführen sind, wobei die verschiedenen aufeinanderfolgenden Zustandswörter in einem Speicher (50) gespeichert sind.

10. Vorrichtung nach einem der Ansprüche 8 oder 9, dadurch gekennzeichnet, daß die schwenkbare Antenne aufweist :
— eine Gruppe von N Phasenschiebern (42) ;
— N strahlende Elemente (43), die an je einen der Phasenschieber angeschlossen sind ;
— einen logischen Kreis (44) zur Steuerung der Phasenschieber, der von den Steuermittels (5) Informationen betreffend die Art des durchzuführenden Schwenks empfängt, nämlich die Winkelfunktion oder die verstärkte Präambel und den Zeitpunkt des Beginns dieses Schwenks.

11. Empfangsvorrichtung zur Durchführung des Verfahrens nach einem der Ansprüche 1 bis 7, die ein Signal empfangen kann, das mindestens eine Azimutfunktion, eine Elevationsfunktion, eine Funktion Basisdaten und eine Funktion Hilfsdaten bildet, wobei jede Funktion eine der eigentlichen Funktion vorhergende Präambel enthält, die eine Identifikationsinformation bezüglich dieser Funktion sowie eine einen Zeitbezugswert bildende Information aufweist, und wobei die Empfangsvorrichtung enthält :

14

— eine Empfangsantenne (6) ;

— Empfangsmittel (7), die das von der Antenne aufgefangene Signal zugeführt erhalten und ein Zwischenfrequenzsignal liefern ;

— Mittel (9, 10) zur Demodulation und Dekodierung des Zwischenfrequenzsignals, die die Basis- oder Hilfsdaten sowie die Identifikation und den Zeitbezugwert ($t_{REF}$) liefern, die in der Präambel enthalten sind ;

— Mittel (17), die ein Videosignal (video log) aufgrund des von den Empfangsmitteln (7) gelieferten Signals liefern ;

— Mittel (15) zur Winkelmessung ausgehend vom Videosignal und dem Zeitbezugswert ($t_{REF}$) ; gekennzeichnet durch

— Verarbeitungsmittel, die im empfangenen Signal eine zusätzliche Präambel erkennen sollen, verstärke Präambel genannt, die während eines Schwenkzyklus der Empfangsantenne durch einen der Schwenkstrahlen eines MLS-Systems erzeugt wird, wobei der Zyklus dem Empfang mindestens einer der Funktionen vorausgeht und mindestens zwei Schwenks in einer Richtung und einen Schwenk in Gegenrichtung oder mindestens einen Schwenk in der einen Richtung und zwei Schwenks in Gegenrichtung aufweist, wobei die Verarbeitungsmittel in Kaskade enthalten :

— Mittel (25, 26, 20) zur Umwandlung des Videosignals in ein digitales Signal ;

— Mittel (23) zum Erkennen und Bestätigen der verstärkten Präambel ausgehend von Zeitintervall (Δ) zwischen zwei gleichartigen Schwenks ;

— Mittel zur Bestimmung des mittleren Zeitpunkts der von einem Schwenk in der einem Richtung und einem Schwenk in Gegenrichtung gebildeten Folge und zur Ableitung einer Information hieraus, die einen in der verstärkten Präambel enthaltenen Zeitbezugswert ($t_{REF}$ verstärkt) für die Winkelmeßmittel (15) bildet.

12. Vorrichtung nach Anspruch 11, dadurch gekennzeichnet, daß die Mittel zur Digitalisierung des Videosignals (video log) einen Tastkreis (25) und einen Analog-Digitalwandler (26) enthalten, und daß weiter ein Schwellenglied (20) vorgesehen ist, das hinter den Mitteln (23) zum Erkennen und Bestätigen der verstärkten Präambel liegt.

13. Vorrichtung nach Anspruch 11, dadurch gekennzeichnet, daß die Digitalisierungsmittel ein Schwellenglied (20) enthalten.

14. Vorrichtung nach einem der Ansprüche 12 oder 13, dadurch gekennzeichnet, daß dem Schwellenglied (20) ein Breitendiskriminatorkreis (21) nachgeschaltet ist.

15. Vorrichtung nach einem der Ansprüche 11 bis 14, dadurch gekennzeichnet, daß die Mittel (23) zum Erkennen und Bestätigen der verstärkten Präambel eine Korrelation mithilfe eines Schieberegisters (231), das das ihm zugeführte Signal um das Zeitintervall (Δ) zwischen zwei gleichartigen Schwenks verzögert, und eines Multiplizierglieds (232) bewirken, das das Eingangssignal und das Ausgangssignal des Schieberegisters zugeführt erhält und diese miteinander multipliziert.

0 129 471

FIG_1-a

FIG_1-b

FIG_2

FiG_3-a

FiG_3-b

## FIG_4-a

PR | S1 | AZ1 | S2 | AZ2 | S3 | AZ3 | B1 | B2

| | SITE | AZIMUT | SITE | AZIMUT | SITE | AZIMUT | BASE | BASE | $t$

0 ... 10 ... 20 ... 30 ... 40 ... 50 ... 60 ... 67,456 (ms)

PRÉAMBULE RENFORCE

## FIG_4-b

M1 | M2 | C1 | M3 | C2 | A1 | M4 | M5

MODULE | MODULE | | MODULE | | | MODULE

0 ... 50 ... 100 ... 150 ... 200 ... 250 ... 300 ... 350

M5 | C3 | A2 | M6 | C4 | A3 | M7 | M8

MODULE | | | MODULE | | | MODULE | MODULE | $t$ (ms)

350 ... 400 ... 450 ... 500 ... 550 ... 600 ... 650 ... 670,208

0 129 471

# FIG_5-a

PRÉAMBULE RENFORCE

| $P_R$ | $S_1$ SITE | $AZ_1$ AZIMUT | $S_2$ SITE | $AZ_2$ AZIMUT | $S_3$ SITE | $AZ_3$ AZIMUT | $S_4$ SITE | $AZ_4$ AZIMUT |

0    10    20    30    40    50    60    70

| $S_5$ SITE | $AZ_5$ AZIMUT | $S_6$ SITE | $AZ_6$ AZIMUT | $B_1$ | $AZR$ AZIMUT ARRIERE | $B_2$ | $B_3$ | $B_4$ | $B_5$ |

80    90    100    110    BASE 2    120    130    BASE    140

141,184 ms

# FIG_5-b

| $M_1$ MODULE | $A_1$ | $M_2$ MODULE | $A_2$ |

0    100    200    300    350

| $M_3$ MODULE | $A_3$ | $M_4$ MODULE |

350    400    500    600    635,392 ms

t (ms)

0 129 471

FIG_6

# FIG_7

(42)

ADRESSES                                          DONNEES

448                                              447

COMPTEUR-
446   DECOMPTEUR                    ADRESSES        MEMOIRE
      ADRESSES

                      COMPTEUR-         ADRESSES
                      DECOMPTEUR
                      POINTAGE    445                45

44

                  SEQUENCEMENT   444

51

52

                  SELECTION     443
                  HORLOGE

                  $P_R$        $B_{AZ}$

      HORLOGE           DIVISEUR
                        PAR DEUX

                441        442

FiG_8

# FIG_9

# FIG_10